# EUROPÄISCHE PATENTSCHRIFT

(11) **EP 3 660 471 B1**
(45) Veröffentlichungstag und Bekanntmachung des Hinweises auf die Patenterteilung: **22.03.2023**
(21) Anmeldenummer: 19212278.6
(22) Anmeldetag: 28.11.2019
(51) Int. Cl.: G01F 1/20, B05C 17/005, G01F 13/00, G01F 23/00, B05B 12/08, B05C 5/02, B05C 11/00, B27G 11/00, B05C 11/10, G01F 9/00

(54) **MESSSYSTEM ZUR ERFASSUNG EINES FÜLLSTANDS EINES KLEBSTOFFTANKS UND KLEBEPISTOLE MIT EINEM SOLCHEN MESSSYSTEM**
MEASURING SYSTEM FOR DETECTING THE FILL LEVEL OF AN ADHESIVE TANK AND AN ADHESIVE GUN COMPRISING SUCH A MEASURING SYSTEM
SYSTÈME DE MESURE PERMETTANT DE DÉTECTER UN NIVEAU DE REMPLISSAGE D'UN RÉSERVOIR D'ADHÉSIF ET PISTOLET À COLLE DOTÉ D'UN TEL SYSTÈME DE MESURE

(30) Priorität: 28.11.2018 DE 102018130079
(43) Veröffentlichungstag der Anmeldung: 03.06.2020
(73) Patentinhaber: Bühnen GmbH & Co. KG, 28277 Bremen (DE)
(72) Erfinder: Kruse, Hermann, 27798 Hude (DE); Helms, Reinhard, 28816 Stuhr (DE)
(74) Vertreter: Tappe, Udo

(56) Entgegenhaltungen:
- EP-A2- 0 446 920
- WO-A1-2012/061347
- DE-A1- 1 650 013
- DE-A1- 19 609 094
- DE-A1-102007 004 472
- BÜHNEN GMBH: "Original-Betriebsanleitung Translation of the original Operating Manual Schmelzklebstoff-Auftragsgerät Hot Melt Applicator HB 720 K R/S H2190XM (Ausgabe 07-2018)", BEWERBER-INTERNETSEITE, 1. Juli 2018 (2018-07-01), XP055679289,

## Beschreibung

Die Erfindung betrifft ein Messsystem zur Erfassung des Füllstandes eines Klebstofftanks. Ferner betrifft die Erfindung eine Klebepistole zum Ausbringen eines flüssigen Klebstoffes auf ein Werkstück, die einen Klebstofftank mit einem Füllstandssensor aufweist.

Das Dokument DE 196 09 094 A1 zeigt ein solches Messsystem.

Aus dem Stand der Technik ist eine Vielzahl von Klebepistolen, insbesondere Heißklebepistolen, bekannt, die in unterschiedlichen Ausführungen sowohl von Handwerkern als auch in der Industrie verwendet werden. Der Einsatz von Heißklebepistolen erfolgt in verschiedenen Bereichen, da sich unterschiedliche Materialien in nahezu jeder beliebigen Kombination schnell und sicher verkleben lassen. Die Bereitstellung des Klebstoffes kann hierbei auf unterschiedliche Weise erfolgen. Vielfach werden, insbesondere von Heimwerkern, Klebepistolen verwendet, denen der Klebstoff in fester, stangenförmiger Form zugeführt wird. Die in der Regel zwischen 90 und 300 mm langen, sogenannten Klebstoffsticks werden von einer Vorschubeinrichtung, die über einen Handabzug betätigt wird, in die üblicherweise als Schmelzbock ausgeführte Heizeinrichtung geschoben. In der Heizeinrichtung wird der Klebstoffstick stückweise geschmolzen und der Klebstoff tritt schließlich in heißem zähflüssigen Zustand aus einer Austragsdüse am vorderen Ende der Heißklebepistole aus. Durch Nachschieben des festen Teils des Klebstoffsticks wird der flüssige Teil durch die Düse hinausgedrückt. Neben diesen, in der Regel von Heimwerkern verwendeten Heißklebepistolen mit mechanisch wirkender Vorschubeinrichtung, sind, vorzugsweise für industrielle Anwendungen, Heißklebepistolen bekannt, in denen der verflüssigte Klebstoff mit Hilfe von Druckluft gefördert und auf das zu verklebende Werkstück ausgebracht wird.

In diesem Zusammenhang ist aus der DE 20 2015 002 318 U1 eine Heißklebepistole für strangförmige Schmelzklebersticks bekannt. Die beschriebene Heißklebepistole verfügt hierbei über einen manuell zu betätigenden Handhebel, über den eine Vorschubeinheit, die den Schmelzkleberstick in die Schmelzkammer fördert, bewegt wird. Mithilfe der Vorschubeinheit werden die strangförmigen Schmelzklebersticks zunächst in und durch die Schmelzkammer der Heißklebepistole und anschließend zur Austragsdüse, durch die der zähflüssige Klebstoff austritt, gefördert.

Werden größere Mengen von Klebstoff benötigt, beispielsweise um größere Flächen miteinander zu verkleben, so müssten bei Einsatz von mechanisch betätigten Heißklebepistolen eine Vielzahl von strangförmigen Schmelzklebersticks verwendet werden. In diesen Fällen ist es daher von Vorteil, wenn anstelle von strangförmigen Schmelzklebersticks Kartuschen verwendet werden, in denen der benötigte Klebstoff bevorratet wird. Eine entsprechende technische Lösung ist aus der DE 20 2004 016 067 U1 bekannt. Die beschriebene Heißklebepistole verfügt über eine Aufnahme, in die eine Kartusche mit dem jeweils benötigten Klebstoff einsetzbar ist, wobei sich die Aufnahme zwischen einer Heizeinheit und einem Halter befindet, die derart relativ zu einander verschwenkbar sind, dass Kartuschen unterschiedlicher Größe und insbesondere auch vergleichsweise große Kartuschen verwendbar sind.

Werden noch größere Mengen Klebstoff benötigt, so stellen auch Kartuschen keine wirtschaftlich sinnvolle Lösung für die Bereitstellung des Klebstoffes dar. So sind die kleinen Kartuschen vergleichsweise teuer und müssten bei großem Klebstoffbedarf, beispielsweise in der Möbelproduktion, häufig gewechselt werden. Zur Lösung dieses Problems sind für den Einsatz im industriellen Umfeld im Wesentlichen zwei unterschiedliche Arten von Heißklebepistolen bekannt, in denen die Förderung und Ausbringung des flüssigen Klebstoffes mithilfe von Druckluft bewirkt wird. Einerseits werden stationäre Anlagen eingesetzt, bei denen der erwärmte und flüssige Klebstoff aus einem externen Behälter über entsprechende Rohr- oder Schlauchleitungen zur Austragsdüse der Klebepistole gefördert wird. Andererseits sind mobile Heißklebepistolen bekannt, die über einen integrierten Tank oder eine vergleichsweise große Kartusche zur Bevorratung des Klebstoffes verfügen. In diesen Heißklebepistolen wird in der Regel der Tank und damit der darin enthaltene Klebstoff mithilfe eines Heizelementes erwärmt, sodass der heiße zähflüssige Klebstoff schließlich mithilfe von Druckluft zur Austragsdüse gefördert und durch diese auf das zu verklebende Bauteil aufgesprüht wird.

Eine derartige mobile Heißklebepistole, bei der mithilfe von Druckluft der verflüssigte Klebstoff aus einem vergleichsweise großen Vorratsbehälter zur Austragsdüse gefördert und von dieser auf die für die Verklebung vorgesehene Fläche aufgesprüht wird, ist etwa aus der US 5,020,723 A bekannt. Zur Einleitung der Druckluft, beispielsweise aus einem Druckluftverteilnetz, verfügt die Heißklebepistole über einen Anschluss, an den ein Druckluftschlauch angeschlossen werden kann. Durch Einsatz unterschiedlicher Austragsdüsen ist es möglich, das Sprühbild für das Aufbringen des Klebstoffes bedarfsgerecht anzupassen.

Die Druckschrift DE 10 2015 206 760 A1 zeigt darüber hinaus eine Vorrichtung zur dosierten Abgabe einer Flüssigkeit, bei der der Füllstand der Flüssigkeit in einem Behälter mittels einer Druckmessung bestimmt wird. Außerdem ist dem Dokument US 2017/0128976 A1 ein System zur Abgabe von Flüssigkeit und zur Steuerung eines Abgabevorganges mit einem Luftmassenstromsensor zu entnehmen.

Ausgehend von den aus dem Stand der Technik bekannten Klebepistolen sowie den zuvor geschilderten Problemen liegt der Erfindung die Aufgabe zugrunde, eine Klebepistole in der flüssiger oder verflüssigter Klebstoff mithilfe von Druckluft aus einem Klebstofftank zu einer Austrittsdüse gefördert wird, derart weiterzubilden, dass dem Nutzer eine zuverlässige Information über den aktuellen Füllstand im Klebstofftank gegeben wird. Die anzugebende technische Lösung sollte sich hierbei auf vergleichsweise einfache Weise und mit möglichst geringem konstruktivem Aufwand in eine Klebepistole, insbesondere eine Heißklebepistole, integrieren lassen. Aufgrund des Einsatzgebiets sollte die benötigte Sensorik robust, zuverlässig und temperaturbeständig sein und darüber hinaus möglichst wenig Bauraum innerhalb der Klebpistole beanspruchen. Des Weiteren sollte sichergestellt werden, dass eine einfache und sichere Übertragung von Sensorsignalen zu einer Auswerteeinheit erfolgt und die ausgegebene Information über den Füllstand des Klebstofftanks vom Nutzer möglichst intuitiv erfassbar ist.

Die zuvor angegebene Aufgabe wird mit einem Messsystem gemäß Patentanspruch 1 zur Erfassung des Füllstandes eines Klebstofftanks, und mit einer Klebepistole gemäß Patentanspruch 7 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Die Erfindung betrifft ein Messsystem, das den Füllstand in einem Klebstofftank erfasst, aus dem der Klebstoff mithilfe eines Fördermediums, insbesondere mit Hilfe von Druckluft, herausgefördert wird. Das Messsystem verfügt einerseits über einen Sensor, mittels welchem zumindest zeitweise ein Zustand des Fördermediums wenigstens lokal erfassbar und wenigstens zeitweise in Abhängigkeit eines Zustandswertes des Fördermediums ein Messsignal erzeugbar ist und andererseits über eine Auswerteeinheit, welche ausgebildet ist, um das vom Sensor in Abhängigkeit wenigstens eines Parameters der Fördermediums erzeugte Messsignal zu empfangen und basierend auf dem Messsignal, insbesondere aufgrund der Dauer eines elektrischen Signals und/oder der Unterbrechungsdauer des Signals den Füllstand innerhalb des Klebstofftanks zu ermitteln. Vorzugsweise verfügt der Sensor über ein Stellelement, das sich in Abhängigkeit einer Druckbeaufschlagung durch das Fördermedium entgegen einer Rückstellkraft, bevorzugt entgegen einer Federkraft bewegt. Vorzugsweise wird die Bewegung des Stellelements jeweils bei einer Änderung der Druckverhältnisse in einem Strömungskanal des Sensors bewirkt.

Vorzugsweise wird der Sensor, insbesondere zumindest ein Strömungskanal des Sensors, von dem Fördermedium durchströmt und verfügt über ein Stellelement, durch das eine zwischen einem Einlass und einem Auslass für das Fördermedium angeordnete Durchströmöffnung des Sensors wenigstens zeitweise verschließbar ist. In diesem Zusammenhang ist es von Vorteil, wenn ferner zwischen dem Einlass und dem Auslass eine Überströmöffnung vorgesehen ist, durch die zumindest in geschlossenem Zustand der Durchströmöffnung Fördermedium strömt.

Gemäß einer speziellen Ausführungsform ist eine Ausgabeeinheit zur Ausgabe einer Information über den Füllstand des Klebstofftanks vorgesehen, an die die Auswerteeinheit ein unter Zugrundelegung des ermittelten Füllstandes erzeugtes Informationssignal überträgt, das die Informationsausgabe durch die Ausgabeeinheit initiiert.

In einer speziellen Ausführungsform der Erfindung ist vorgesehen, dass die Ausgabeeinheit ausgebildet ist, um unter Zugrundelegung des in der Auswerteeinheit ermittelten Füllstandswerts wenigstens zeitweise eine visuell und/oder akustisch wahrnehmbare Information über den Füllstand des Klebstoffes im Klebstofftank auszugeben. Auch wenn es generell denkbar ist, dass eine entsprechende Information akustisch, insbesondere über einen Lautsprecher, ausgegeben wird, ist es von Vorteil, wenn die Ausgabeeinheit ein Display oder eine sonstige Anzeigeeinheit hat. Ganz besonders geeignet ist eine Ausgabeeinheit, die wenigstens eine LED hat, über die eine Information in Bezug auf den aktuellen Füllstand im Klebstofftank ausgegeben wird. In diesem Zusammenhang ist es besonders vorteilhaft, wenn die Ausgabeeinheit wenigstens zwei, bevorzugt eine noch größere Anzahl von LEDs hat, sodass die Ausgabe gezielt variiert werden kann, um den Informationsgehalt zu erhöhen.

Gemäß einer besonderen Weiterbildung der Erfindung hat die Ausgabeeinheit wenigstens zwei LEDs, die derart eingerichtet sind, dass eine Information über den Füllstand des Klebstoffes im Klebstofftank ausgegeben wird, indem wenigstens zeitweise eine unterschiedliche Anzahl von LEDs und/oder LEDs unterschiedlicher Farbe aufleuchten. Diesbezüglich ist es etwa denkbar, dass auf der Außenseite des Gehäuses der Klebepistole eine Mehrzahl, beispielsweise fünf, LEDs vorgesehen sind, wobei in Abhängigkeit des Füllstandes im Klebstofftank eine unterschiedliche Anzahl von LEDs während des Betriebs der Klebepistole aufleuchten.

Ferner betrifft die Erfindung eine Klebepistole zum Ausbringen eines flüssigen Klebstoffes mit einem Klebstofftank, in dem wenigstens zeitweise ein flüssiger, insbesondere ein zumindest zeitweise verflüssigter Klebstoff bevorratet wird, mit einer Austragsdüse, durch die der flüssige Klebstoff ausbringbar ist, und mit einer Vorschubeinheit, die bei Betätigen eines Bedienelements flüssigen Klebstoff aus dem Klebstofftank über eine Förderleitung zu der Austragsdüse fördert. Die Vorschubeinheit weist wenigstens eine Druckluftführung auf, die zumindest zeitweise derart fluidkommunizierend mit dem Klebstofftank verbunden ist, dass flüssiger Klebstoff aufgrund eines Über- oder Unterdrucks, der durch einen die Druckluftführung durchströmenden Luftstrom erzeugt wird, zur Austragsdüse gefördert wird. Die Förderung des Klebstoffes kann somit generell sowohl durch eine Druck- als auch eine Sogwirkung bewirkt werden, auch wenn eine Förderung unter Druckbeaufschlagung, vor allem aufgrund der Zähflüssigkeit des Klebstoffes, von Vorteil ist. Erfindungsgemäß zeichnet sich die Klebepistole dadurch aus, dass die Druckluftführung ein erfindungsgemäßes Messsystem hat, mit wenigstens einem Sensor, mittels welchem in Abhängigkeit des die Druckluftführung durchströmenden Luftstroms ein Messsignal erzeugbar und an einer Auswerteeinheit übertragbar ist, welche ausgebildet ist, um auf der Grundlage des Messsignals einen den Füllstand des Klebstofftanks repräsentierenden Füllstandswert zu ermitteln und an eine Ausgabeeinheit zu übertragen. Wesentlich für die erfindungsgemäße technische Lösung ist somit, dass in Druckluftführung wenigstens ein Sensor integriert ist, der basierend auf wenigstens einem innerhalb der Druckluftführung ermittelten Zustand und/oder Zustandsparameter einen den aktuellen Füllstand des Klebstofftanks repräsentierenden Messwert erzeugt und an eine Auswerteeinheit übermittelt. In der Auswerteeinheit kann somit basierend auf dem erhaltenen Messsignal eine Information über den aktuellen Füllstand im Klebstofftank erzeugt und diese über eine geeignete Ausgabeeinheit dem Nutzer bekannt gegeben werden. Erfindungswesentlich ist, dass der Sensor den als Fördermedium eingesetzten Luftstrom, insbesondere sich während des Betriebs der Klebepistole zumindest lokal verändernde Eigenschaften des Luftstroms, nutzt, um auf geeignete Weise den Füllstand im Klebstofftank zu ermitteln. Für die eingesetzte Messtechnik wird ausgenutzt, dass die in der Druckluftführung auftretenden Eigenschaften des Druckluftstroms, insbesondere Druckänderungen bzw. Änderungen einer Zeitspanne, in der ein Druckauf- oder Druckabbau erfolgt, während des Betriebs in Abhängigkeit des Füllstandes des Klebstofftanks variieren. Die Erfindung beruht somit auf dem Gedanken, dass das Strömungsverhalten und/oder Druckänderungen während der Betätigung eines Bedienelements, aufgrund der die Druckluftführung von Druckluft durchströmt wird, in Abhängigkeit zum jeweiligen Füllstand des Klebstofftanks stehen.

In einer weiteren Ausführungsform ist vorgesehen, dass der Sensor der Klebepistole ausgebildet ist, um wenigstens zeitweise bei Betätigung des Bedienelementes von einem Luftstrom durchströmt zu werden. Bei dem Luftstrom, der den Sensor durchströmt, handelt es sich zumindest um einen Teilstrom der in die Klebepistole eingeleiteten Druckluft. Auf vorteilhafte Weise wird somit wenigstens ein Teilstrom der Druckluft, die für die Förderung und Ausbringung des flüssigen Klebstoffs benötigt wird, durch den Sensor geleitet. Im Weiteren ist es denkbar, dass der Sensor wenigstens zwei Strömungskanäle hat, in denen während des Betriebs der Klebepistole zumindest zeitweise Druckluft strömt. Gemäß einer speziellen Ausführung der Erfindung verfügt einer der Strömungswege über eine Durchströmöffnung, die während des Betriebs der Klebepistole variiert und Teil des Messsystems ist, das der Messung des Füllstandes im Klebstofftank dient. Weiterhin ist es von Vorteil, wenn zumindest in einem weiteren Strömungskanal des Sensors eine Überströmöffnung vorgesehen ist, die immer dann, wenn Druckluft durch die Druckluftführung strömt zumindest von einem kleinen Teilstrom des Gesamtdruckluftstroms durchströmt wird.

In einer besonderen Weiterbildung der Erfindung ist vorgesehen, dass der Sensor ein Stellelement hat, durch das die Durchströmöffnung zumindest zeitweise während des Betriebs der Klebstoffpistole geschlossen ist. Vorzugsweise ist ein Federelement vorgesehen, dass das Stellelement derart mit einer Federkraft beaufschlagt, dass, sofern keine weiteren Kräfte an dem Stellelement angreifen, die Durchströmöffnung geschlossen ist. Im Weiteren ist das Federelement auf vorteilhafte Weise derart ausgeführt, dass sobald Druckluft in die Druckluftführung der Klebepistole einströmt, sich zunächst eine Druckdifferenz zwischen dem stromaufwärts der Durchströmöffnung befindlichen Drucklufteinlass und dem stromabwärts der Durchströmöffnung befindlichen Druckluftauslass einstellt. Die hieraus resultierende Druckkraft wirkt der Federkraft entgegen und sorgt dafür, dass sich das Stellelement entgegen der Federkraft bewegt und die Durchströmöffnung freigegeben wird. Nach einer gewissen Zeitspanne stellt sich ein Druckausgleich zwischen dem Drucklufteinlass und dem Druckluftauslass ein, sodass sich das Stellelement wieder aufgrund der Federkraft bewegt und die Durchströmöffnung verschließt. Da die Zeitspanne, in der der Druckausgleich stattfindet, vom Füllstand des Klebstofftanks, aus dem der flüssige Klebstoff mit Hilfe der Druckluft herausgefördert wird, abhängt, kann durch Ermittlung der Zeitspanne, in der das Stellelement die Durchströmöffnung freigibt, auf den Füllstand des Klebstofftanks geschlossen werden. Die beschriebene spezielle Ausgestaltung der Erfindung beruht somit auf dem Gedanken, dass je mehr sich der Klebstofftank der Klebepistole entleert, desto länger dauert es, bis es zu einem Druckausgleich im Bereich der Durchströmöffnung kommt. Auf vorteilhafte Weise ist es somit denkbar, die Länge der Zeitspanne, in der die Durchströmöffnung freigegeben ist, zu erfassen und in der Auswerteeinheit unter Berücksichtigung der erfassten Zeitspanne, den Füllstand innerhalb des Klebstofftanks zu ermitteln.

Im Gegensatz zur Durchströmöffnung wird die Überströmöffnung während des Betriebs der Klebepistole vorzugsweise von einem zumindest annähernd konstanten Druckluftstrom durchströmt.

Gemäß einer besonderen Ausführungsform der Erfindung steht das Stellelement des Sensors mit einem Stromkreis, an den auch die Auswerteeinheit mittelbar oder unmittelbar angeschlossen ist, in Wirkverbindung. In Bezug auf die elektrische Verschaltung, also die Anordnung des Sensors in dem elektrischen Stromkreis, ist es von Vorteil, wenn am Sensor keine elektrische Spannung anliegt, sobald die Durchströmöffnung des Sensors von dem Luftstrom durchströmt wird. Gemäß dieser speziellen Ausführungsform ist somit vorgesehen, dass der Stromkreis, in den der Sensor eingebunden ist, unterbrochen ist, sobald das Stellelement entgegen der Federkraft in eine Öffnungsstellung bewegt worden ist, sodass Druckluft die Durchströmöffnung durchströmt.

Auf vorteilhafte Weise ist diesbezüglich vorgesehen, dass die Auswerteeinheit eingerichtet ist, um unter Berücksichtigung einer Zeitspanne, in der der elektrische Stromkreis, in dem der Sensor angeordnet ist, unterbrochen ist bzw. am Sensor keine elektrische Spannung anliegt, einen den Füllstand des Klebstofftanks repräsentierenden Füllstandswert zu ermitteln. Die Zeitspanne, in der der elektrische Stromkreis, in dem der Sensor angeordnet ist, unterbrochen ist, entspricht somit der Zeitspanne, in der Druckluft durch die Durchströmöffnung des Sensors strömt. Auf vorteilhafte Weise hat der Sensor in Bezug auf den Stromkreis, in den er eingebunden ist, somit die Funktion eines Schalters, der geöffnet wird, sobald die Durchströmöffnung des Sensors von Druckluft durchströmt wird.

Generell kann eine erfindungsgemäß ausgeführte Klebepistole sowohl mit bei Raumtemperatur flüssigen oder pastösen Klebstoffen als auch mit Klebstoffen verwendet werden, die zunächst verflüssigt werden müssen. Auf vorteilhafte Weise wird die Erfindung mit einer Heißklebepistole verwirklicht. Gemäß dieser speziellen Ausführungsform der Erfindung ist wenigstens ein Heizelement, das den im Klebstofftank bevorrateten Kunststoff zumindest zeitweise während eines Klebebetriebs verflüssigt, vorgesehen. Mit diesem Heizelement wird der im Klebstofftank oder einer Kartusche einer Klebstoffpistole bevorratete Klebstoff bedarfsgerecht verflüssigt. Insbesondere wenn die Klebepistole nicht verwendet wird, weist der Klebstoff bei Raumtemperatur einen festen Aggregatzustand auf.

Des Weiteren ist vorzugsweise ein Temperatursensor vorgesehen, der zumindest zeitweise während des Betriebs der Klebepistole eine Temperatur an der Wand oder im Inneren des Klebstofftanks erfasst. In diesem Zusammenhang ist es denkbar, dass die erfasste Temperatur an eine zentrale Steuereinheit übermittelbar ist, die auf der Grundlage der an oder im Klebstofftank erfassten Temperatur ein Heizelement zur Erwärmung des im Klebstofftank bevorrateten Klebstoffes gezielt ansteuert. Auf diese Weise wird sichergestellt, dass der im Klebstofftank bevorratete Klebstoff bei Bedarf verflüssigt wird, ohne dass es zu einer Überhitzung, insbesondere bei abnehmendem Füllstand innerhalb des Klebstofftanks kommt. Gemäß der beschriebenen Ausführungsform wird mithilfe eines Temperatursensors, der die Temperatur an und/oder im Klebstofftank erfasst, eine Regelung eines Heizelementes zur Erwärmung des im Klebstofftank bevorrateten Klebstoffes, insbesondere der Heizleistung des Heizelementes, realisiert. Ergänzend kann ein weiterer Temperatursensor als Sicherheitselement vorgesehen sein, der bei Erreichen einer festgelegten oberen Grenztemperatur eine Sicherheitsabschaltung des Heizelements auslöst.

Gemäß einer weiteren besonderen Ausführungsform der Erfindung weist der Klebstofftank zumindest teilweise Aluminium auf. Aluminium verfügt in diesem Zusammenhang über den wesentlichen Vorteil, dass es besonders gut Wärme leitet. Eine Aufheizung des im Klebstofftank bevorrateten Klebstoffes ist bei Vorsehen eines Tankbehälters, der Aluminium aufweist, auf dem besonders vorteilhafte Weise möglich. Vorzugsweise wird wenigstens eine Heizfläche des Heizelements wärmeleitend mit der Wand eines Aluminiumbehälters zur Bevorratung des Klebstoffes verbunden.

Im Übrigen ist es von Vorteil, wenn der Klebstofftank sowie die Klebstoffpistole derart ausgeführt sind, dass der Klebstofftank ausgetauscht werden kann, sobald kein Klebstoff mehr im Klebstofftank vorhanden ist. Auf vorteilhafte Weise verfügt der Klebstofftank daher über wenigstens ein Befestigung- oder Verbindungsmittel, über das der Klebstofftank derart mit der Klebstoffpistole und insbesondere der Förderleitung verbindbar ist, dass zumindest eine klebstoffdichte Verbindung zwischen dem Inneren des Klebstofftanks und der zur Austragsdüse der Klebepistole führenden Förderleitung hergestellt werden kann. Ein derartiges Befestigungsmittel kann beispielsweise ein Gewinde haben, das mit einem geeigneten, an der Klebepistole angeordneten Gegengewinde verbindbar ist. Ergänzend oder alternativ sind Klick- und/oder Rastverbindungen denkbar, die eine sichere, lösbar feste Verbindung des Klebstofftanks mit der Klebstoffpistole und insbesondere mit der Förderleitung verwirklichen. In jedem Fall ist es wesentlich, dass ein Austausch des Klebstofftanks derart realisierbar ist, dass auch nach erfolgtem Austausch eine zuverlässige Förderung von flüssigem Klebstoff aus dem Inneren des Klebstofftanks über die Förderleitung zur Austragsdüse gewährleistet ist.

Im Folgenden wird die Erfindung ohne Beschränkung des allgemeinen Erfindungsgedankens anhand von Ausführungsbeispielen unter Bezugnahme auf die Figuren näher erläutert. Dabei zeigen:
- Fig. 1: eine perspektivische Darstellung einer erfindungsgemäßen Heißklebepistole,
- Fig. 2: eine Schnittdarstellung der erfindungsgemäßen Heißklebepistole gemäß Fig. 1,
- Fig. 3: einen Sensor zur Erfassung des Füllstandes in einem Klebstofftank der erfindungsgemäßen Klebstoffpistole, und
- Fig. 4: eine elektrische Verschaltung eines Sensors zur Erfassung des Füllstandes in einem Klebstofftank einer erfindungsgemäßen Klebstoffpistole.

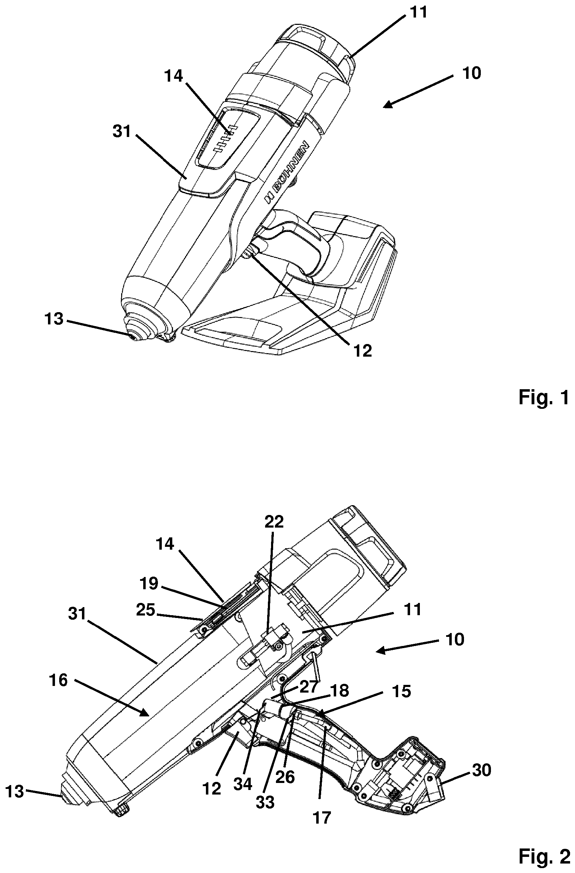

Fig. 1 zeigt eine perspektivische Darstellung einer erfindungsgemäßen Heißklebepistole. Die Heißklebepistole ist in dem Ausführungsbeispiel als Klebepistole 10 ausgebildet, die an eine Drucklufterzeugungseinheit oder ein Druckluftnetz anschließbar ist. Die dargestellte Heißklebepistole 10 verfügt im Inneren über einen Klebstofftank 11, in dem ein bei Raumtemperatur fester Klebstoff bevorratet wird. Ferner verfügt die Heißklebepistole 10 über ein elektrisches Heizelement, das bei Inbetriebnahme der Heißklebepistole aufgeheizt wird und so den im Klebstofftank 11 befindlichen Klebstoff erwärmt und verflüssigt.

Um einen Klebevorgang beginnen zu können, betätigt der Anwender ein als Druckschalter ausgeführtes Bedienelement 12, so dass Druckluft über einen Druckluftanschluss 30 in die Druckluftführung 17 der Heißklebepistole 10 eingeleitet wird. Mit Hilfe der Druckluft wird daraufhin der durch das Heizelement verflüssigte Klebstoff aus dem Klebstofftank 11 über eine Förderleitung zur Austragsdüse 13 gefördert. Soll die Aufbringung von Klebstoff auf ein Werkstück beendet werden, so lässt der Anwender das Bedienelement 12 los und die Druckluftzufuhr sowie die damit verbundene Förderung von Klebstoff aus dem Klebstofftank 11 wird unterbrochen. Die Temperatur des Klebstofftanks 11 wird mit Hilfe eines Temperatursensors erfasst, der einen entsprechenden Messwert an die Steuerung der Klebepistole 10 überträgt. In der Steuerung wird der erfasste Temperaturmesswert mit einem Grenzwert verglichen und schließlich bei Erreichen des Grenzwertes das Heizelement ausgeschaltet. So wird die Temperatur unabhängig von dem Füllstand und dem Klebstoffaustrag weitgehend in dem Klebstofftank 11 konstant gehalten.

Die Fig. 1 dargestellte Heißklebepistole 10 zeichnet sich durch ein Messsystem zur Füllstandserfassung aus, das den Füllstand von Klebstoff im Klebstofftank 11 erfasst und den Anwender mithilfe einer Ausgabeeinheit 14 über den aktuellen Füllstand informiert.

Eine Auswerteeinheit der zentralen Steuerung der Klebstoffpistole 10 erhält während des Betriebs der Klebepistole 10 zeitweise ein Messsignal, das zur Ermittlung des Füllstandes des Klebstofftanks 11 ausgewertet wird. Auf der Grundlage der Auswertung wird im Weiteren ein geeignetes Steuersignal an die Ausgabeeinheit 14 übertragen. In dem dargestellten Ausführungsbeispiel verfügt die Ausgabeeinheit 14 der Heißklebepistole 10 über fünf LEDs, die auf der Oberseite des Klebepistolengehäuses 31 angeordnet sind. In Abhängigkeit des Füllstandes des Klebstofftanks 11 leuchten entweder eine oder eine Mehrzahl von LEDs. Lediglich sofern der Klebstofftank 11 vollständig entleert ist, leuchtet keine der im Gehäuse 15 der Klebstoffpistole 10 angeordneten LEDs.

In Fig. 2 zeigt eine Schnittansicht der erfindungsgemäßen Heißklebepistole 10 gemäß Fig. 1. Die Heißklebepistole 10 verfügt über einen Klebstofftank 11, in dem ein bei Raumtemperatur fester Klebstoff bevorratet wird. Während des Betriebs der Heißklebepistole 10 wird der Klebstofftank 11, dessen Tankwand aus Aluminium hergestellt ist, mithilfe eines Heizelementes 22 derart erwärmt, dass der in dem Klebstofftank 11 bevorratete Klebstoff verflüssigt wird.

Während des Betriebs der Heißklebepistole 10 wird die Temperatur im Klebstofftank 11 mit Hilfe eines Temperatursensors 23 überwacht und die Beheizung des Klebstofftanks 11 und damit des im Klebstofftank 11 bevorrateten Klebstoffes in Abhängigkeit der erfassten Temperatur geregelt.

Am unteren Ende des Handgriffs verfügt die Heißklebepistole 10 über einen Anschluss 30 für eine Druckluftleitung, über die Druckluft entweder direkt von einem Drucklufterzeuger oder aus einem Druckluftversorgungssystem in die Heißklebepistole 11 eingeleitet werden kann. Bei Betätigung des als Fingerschalter ausgeführten Bedienelements 12 im oberen Bereich des Handgriffs, der üblicherweise vom Anwender mit dem Zeigefinger betätigt wird, wird ein Ventil im Handgriff derart geöffnet, dass Druckluft in die Druckluftführung 17 der Klebepistole 10 eingeleitet wird. Mithilfe der in die Klebepistole 10 eingeleiteten Druckluft wird erwärmter flüssiger Klebstoff aus dem Klebstofftank 11 zur Austragsdüse 13 der Heißklebepistole 10 gefördert. Durch die Austragsdüse 13, die in Abhängigkeit des jeweiligen Anwendungsfalls gewählt wird, wird flüssiger Heißkleber auf die für die Verklebung vorgesehene Werkstückoberfläche aufgebracht.

Für die Überwachung des Klebstofffüllstandes im Klebstofftank 11 verfügt die in Fig. 2 dargestellte Heißklebepistole 10 über einen Sensor 18, der eine zwischen einem Drucklufteinlass 26 und einem Druckluftauslass 27 angeordnete Durchströmöffnung 28 aufweist. Die Durchströmöffnung 28 des Sensors 18 wird mit Hilfe eines von der Kraft einer Feder 21 beaufschlagten Stellelements 20 geschlossen und lediglich geöffnet, sofern eine durch die Luftströmung im Bereich der Durchströmöffnung 28 verursachte Kraft größer als die Federkraft ist. Betätigt der Anwender das Bedienelement 12, so strömt Druckluft in die Druckluftführung 17 der Heißklebepistole 10 und somit auch zum Füllstandssensor. Im Füllstandssensor 18 wird aufgrund der durch die einströmende Druckluft bewirkten Kraft das Stellelement 20 entgegen der Federkraft bewegt und die Durchströmöffnung 28 freigegeben. Sobald ein Druckgleichgewicht zwischen dem Einlass 26 und dem Auslass 27 hergestellt ist und die von der Druckluft auf das Stellelement 20 ausgeübte Kraft kleiner als die Federkraft ist, schließt das Stellelement 20 die Durchströmöffnung 28 des Sensors 18.

In dem hier beschriebenen Ausführungsbeispiel ist der Sensor 18 und insbesondere das Stelleelement 20 derart ausgeführt, dass, sofern der Klebstofftank 11 vollständig mit Klebstoff gefüllt ist, die Durchströmöffnung 28 für 0,3 Sekunden freigegeben wird. Sofern der Tank 11 keinen Klebstoff enthält, wird die Durchströmöffnung 28 für 4 Sekunden offengehalten. Dies ist vor allem darauf zurückzuführen, dass das von der Druckluft zu füllende Volumen umso größer ist, je weniger Klebstoff sich im Klebstofftank 11 befindet. Auf der Grundlage der Zeitspanne, die die Durchströmöffnung 28 geöffnet ist, ermittelt die Auswerteeinheit 19 unter Berücksichtigung eines vom Sensor 18 zeitweise erzeugten Messsignals den Klebstofffüllstand im Klebstofftank 11. Der Sensor 18 ist hierfür in Form eines Schalters in einem Stromkreis 32 angeordnet, mit dem auch die Auswerteeinheit 19 verbunden ist. Sobald die Durchströmöffnung 28 geöffnet ist, wird auch der Schalter geöffnet und es fließt kein Strom durch den entsprechenden Stromkreis 32. Erst wenn die Durchströmöffnung 28 wieder geschlossen ist, wird der Schalter des Sensors 18 geschlossen und es fließt erneut ein Strom durch den Stromkreis 32. Die Zeitspanne, in der kein Strom durch den Stromkreis 32 fließt, weil die Durchströmöffnung 28 geöffnet ist, dient der Ermittlung des Füllstandes des Klebstofftanks 11.

Um eine möglichst exakte Ermittlung des Füllstandes zu ermöglichen, verfügt die Auswerteeinheit 19, die in die Steuerung 25 der Heißklebepistole 10 integriert ist, über einen Datenspeicher, in dem zumindest eine Kennlinie hinterlegt ist. Über diese Kennlinie wird jedem Zeitpunkt innerhalb einer Zeitspanne, in dem hier beschriebenen Ausführungsbeispiel zwischen 0,3 Sekunden und 4,0 Sekunden, ein Füllstand des Klebstofftanks 11 zugeordnet. In dem vorliegenden Ausführungsbeispiel erfolgt die Anzeige des Füllstandes mittels einer Ausgabeeinheit 14, die fünf LEDs aufweist. Leuchten sämtliche LEDs, so ist der Klebstofftank 11 zu 100 % mit Klebstoff gefüllt. Sinkt der Füllstand auf 80 %, so leuchten nur noch vier LEDs. Diese Art der Anzeige setzt sich entsprechend dem Füllstand in Schritten, die jeweils 20% des Füllstandes der Klebstofftanks 11 entsprechen, fort. Erst wenn der Füllstand innerhalb des Klebstofftanks 11 unter einen Wert von 20 % des maximalen Füllstands sinkt, erlischt auch die letzte LED, sodass dem Anwender, bereits wenn sich noch eine Sicherheitsreserve von Klebstoff im Klebstofftank 11 befindet, deutlich angezeigt wird, dass möglichst zeitnah der Klebstofftank 11 gefüllt oder ausgetauscht werden muss.

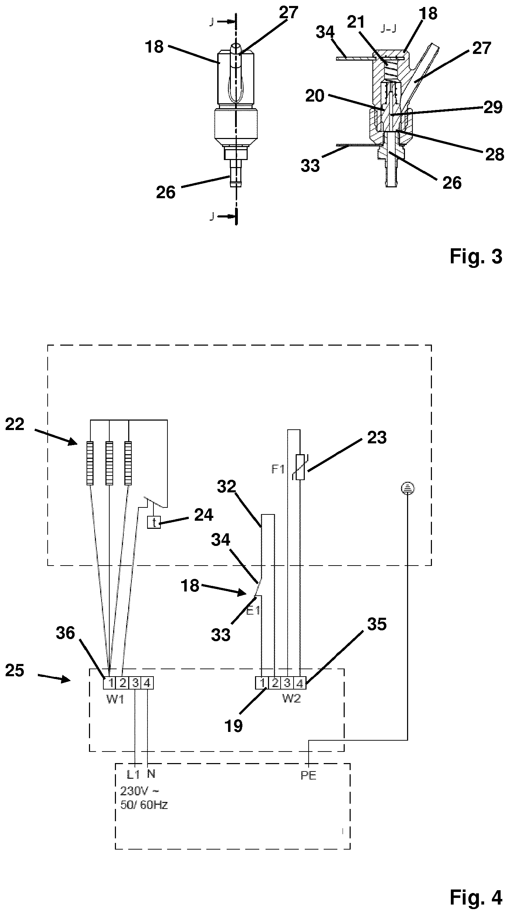

Fig. 3 zeigt in einer Seitenansicht sowie einer Schnittansicht einen Sensor zur Erfassung des Füllstandes in einem Klebstofftank der erfindungsgemäßen Klebstoffpistole. Der Sensor 18 wird für die Ermittlung des Füllstandes eines Klebstofftanks 11 einer Heißklebepistole10 verwendet. Der Sensor 18 verfügt über einen Drucklufteinlass 26 sowie einen Druckluftauslass 27. Ferner ist in der Mitte des Sensors 18 ein beweglich angeordnetes Stellelement 20 vorgesehen, das einseitig von einer Feder 21 mit einer Federkraft beaufschlagt wird. Sobald eine Druckkraft, die von der Druckluft im Bereich der Durchströmöffnung 28 auf das Stellmittel 20 ausgeübt wird, größer als die Federkraft ist, bewegt sich das Stellelement 20 nach oben und die Durchströmöffnung 28 zwischen Drucklufteinlass 26 und Druckluftauslass 27 wird freigegeben. Gleichzeitig wird ein Stromkreis 32 zwischen zwei elektrischen Kontakten 33, 34 des Sensors 18 unterbrochen. Erst wenn es im Bereich der Durchströmöffnung 28 zwischen dem Drucklufteinlass 26 und dem Druckluftauslass 27 zu einem Druckausgleich kommt und die von der Druckluft bewirkte Kraft kleiner als die Federkraft ist, bewegt sich das Stellelement 20 wieder nach unten und verschließt die Durchströmöffnung 28. In diesem Moment wird auch der elektrische Stromkreis 32 zwischen dem oberen und dem unteren Kontakt 33, 34 des Sensors 18 wieder geschlossen. Die Zeitspanne, in der kein Strom zwischen dem oberen und dem unteren Kontakt 33, 34 des Sensors 18 fließt, entspricht somit den Zeitraum, in dem die Durchströmöffnung 28 freigegeben ist.

Im Übrigen verfügt der Sensor noch über einen weiteren Strömungskanal. Dieser Strömungskanal stellt eine Überströmöffnung 29 dar, durch die auch bei wenn sich das Stellelement 20 in seiner Schließstellung befindet, ein zumindest nahezu konstanter Druckluftstrom strömt.

In Fig. 4 ist ein elektrisches Schaltbild einer erfindungsgemäß ausgeführten Heißklebepistole 10 dargestellt. Die Heißkleberpistole 10 verfügt über einen Klebstofftank 11, der mithilfe eines Heizelements 22, das drei elektrische Heizpatronen aufweist, erwärmt werden kann, sodass der innerhalb des Klebstofftanks 11 bevorratete Klebstoff verflüssigt wird. An der Wand des Klebstofftanks 11 ist ein Temperatursensor 23 vorgesehen, der während des Betriebs der Heißklebepistole 10 erfasste Temperaturwerte an die zentrale Steuerung 25 der Heißklebepistole überträgt. In der Steuerung 25 der Heißklebepistole 10 findet auf der Grundlage der erfassten Temperaturwerte eine Regelung der Heizleistung der drei Heizpatronen statt. Ergänzend zur Temperaturregelung ist ein Temperaturbegrenzer 24 vorgesehen, der eine Stromversorgung der Heizpatronen unterbricht, sobald trotz der Regelung der Heizleistung der Heizpatronen eine obere Grenztemperatur überschritten wird. Dieser Temperaturbegrenzer 24 stellt somit einen Überhitzungsschutz sicher.

Innerhalb der Steuerung 25 der Heißklebepistole 10 ist in die Temperaturregelung 35 die Füllstanderfassung integriert. Der Füllstandssensor 18 ist in Form eines Schalters in einen separaten Stromkreis 32 eingebunden. Wie bereits zuvor beschrieben worden ist, wird der Stromkreis 32 des Füllstandssensors immer dann unterbrochen, wenn die Durchströmöffnung 28 innerhalb des Sensors 18 freigegeben wird. Hierbei bleibt der Stromkreis 32 so lange unterbrochen, bis die Durchströmöffnung 28 wiederum verschlossen wird. Auf der Grundlage der Zeitspanne, in der kein Strom durch den Stromkreis 32 des Füllstandssensors 18 fließt, ermittelt eine Auswerteeinheit 19 der zentralen Steuerung 25 der Heißklebepistole 10 den aktuellen Füllstand des Klebstofftanks 11, der über eine Ausgabeeinheit 14 dem Anwender angezeigt wird.

### Bezugszeichenliste:

- 10: Klebepistole
- 11: Klebstofftank
- 12: Bedienelement
- 13: Austragsdüse
- 14: Ausgabeeinheit
- 15: Vorschubeinheit
- 17: Druckluftführung
- 18: Füllstandssensor
- 19: Auswerteeinheit
- 20: Stellelement
- 21: Feder
- 22: Heizelement
- 23: Temperatursensor
- 24: Temperaturbegrenzer
- 25: Steuereinheit
- 26: Einlass
- 27: Auslass
- 28: Durchströmöffnung
- 29: Überströmöffnung
- 30: Druckluftanschluss
- 31: Klebepistolengehäuse
- 32: Füllstandssensorstromkreis
- 33: unterer elektrischer Kontakt
- 34: oberer elektrischer Kontakt
- 35: Temperaturregelung
- 36: Heizleistungsregelung

## Patentansprüche

1. Messsystem zur Erfassung des Füllstandes eines Klebstofftanks (11), aus dem wenigstens zeitweise Klebstoff mit Hilfe eines Fördermediums, ausgetragen wird, mit einem Sensor (18), mittels welchem wenigstens zeitweise in Abhängigkeit eines Zustandswerts des Fördermediums ein Messsignal erzeugbar ist und mit einer Auswerteeinheit (19), welche ausgebildet ist, um das Messsignal zu empfangen und auf der Grundlage des Messsignals einen Füllstand des Klebstofftanks (11) zu ermitteln, **dadurch gekennzeichnet, dass** der Sensor (18) ausgebildet ist, um von dem Fördermedium durchströmt zu werden und ein Stellelement (20) hat, welches zumindest zeitweise bei einer auf das Stellelement (20) wirkende Druckänderung bewegbar ist.

2. Messsystem nach Anspruch 1, **dadurch gekennzeichnet, dass** eine Ausgabeeinheit (14) zur Ausgabe einer wenigstens zeitweise visuell und/oder akustisch wahrnehmbaren Information über den Füllstand des Klebstofftanks (11) vorgesehen ist, an welche ein unter Zugrundelegung des ermittelten Füllstandes von der Auswerteeinheit (19) erzeugtes Informationssignal übertragbar ist, welches die Informationsausgabe durch die Ausgabeeinheit (14) initiiert.

3. Messsystem nach Anspruch 2, **dadurch gekennzeichnet, dass** die Ausgabeeinheit (14) ein Display und/oder wenigstens eine LED, insbesondere wenigstens zwei LED hat, die derart eingerichtet sind, dass eine Information über den Füllstand des Klebstoffs im Klebstofftank (11) ausgegeben wird, indem wenigstens zeitweise eine unterschiedliche Anzahl von LED und/oder LED unterschiedlicher Farbe aufleuchten.

4. Messsystem nach einem der vorhergehenden Ansprüche, **dadurch gekennzeichnet, dass** der Sensor (18) ein Stellelement (20) hat, durch welches eine zwischen einem Einlass (26) und einem Auslass (27) für das Fördermedium angeordnete Durchströmöffnung (28) des Sensors (18), wenigstens zeitweise, mindestens teilweise verschließbar ist, wobei vorzugsweise zwischen dem Einlass (26) und dem Auslass (27) eine Überströmöffnung (29) vorgesehen ist, durch die zeitweise zumindest in geschlossenem Zustand der Durchströmöffnung (28) das Fördermedium strömt.

5. Messsystem nach Anspruch 4, **dadurch gekennzeichnet, dass** das Stellelement (20) mit einer Rückstellkraft, insbesondere einer Feder (21), beaufschlagt ist und/oder in einer ersten, insbesondere den Querschnitt der Durchströmöffnung (28) des Sensors (18) verkleinernde, Position gehalten wird, wobei das Stellelement (20) vorzugsweise ausgebildet ist, um wenigstens zeitweise zumindest von dem den Sensor (18) durchströmenden Fördermedium mit einer der Rückstellkraft, insbesondere der Feder (21), entgegenwirkenden Kraft beaufschlagt zu werden und/oder in einer von der ersten Position verschiedenen zweiten, insbesondere den Querschnitt der Durchströmöffnung (28) des Sensors (18) vergrößernde, Position gehalten zu werden.

6. Messsystem nach einem der vorhergehenden Ansprüche, **dadurch gekennzeichnet, dass** das Fördermedium Luft ist.

7. Klebepistole (10) zum Ausbringen eines flüssigen Klebstoffes mit einem Klebstofftank (11), in dem wenigstens zeitweise ein flüssiger Klebstoff bevorratet wird, mit einer Austragsdüse (13), durch die der flüssige Klebstoff ausbringbar ist, und mit einer Vorschubeinheit (15), die bei Betätigen eines Bedienelements (12) flüssigen Klebstoff aus dem Klebstofftank (11) zu der Austragsdüse (13) fördert, wobei die Vorschubeinheit (15) wenigstens eine Druckluftführung (17) aufweist, die zumindest zeitweise derart fluidkommunizierend mit dem Klebstofftank (11) verbunden ist, dass flüssiger Klebstoff aufgrund eines Über- oder Unterdrucks, der durch einen die Druckluftführung (17) durchströmenden Luftstrom erzeugt wird, zur Austragsdüse (13) gefördert wird, **dadurch gekennzeichnet, dass** die Druckluftführung (17) ein Messsystem nach einem der Ansprüche 1 bis 6 hat, mit wenigstens einem Sensor (18), mittels welchem in Abhängigkeit des die Druckluftführung (17) durchströmenden Luftstroms ein Messsignal erzeugbar und an eine Auswerteeinheit (19) übertragbar ist, welche ausgebildet ist, um auf der Grundlage des Messsignals einen den Füllstand des Klebstofftanks (11) repräsentierenden Füllstandswert zu ermitteln und an eine Ausgabeeinheit (14) zu übertragen.

8. Klebepistole nach Anspruch 7, **dadurch gekennzeichnet, dass** der Sensor (18) ausgebildet ist, um wenigstens zeitweise bei Betätigen des Bedienelements (12) von zumindest einem Teilstrom des Luftstroms durchströmt zu werden, wobei der Sensor (18) vorzugsweise derart in einen elektrischen Stromkreis verschaltet ist, dass am Sensor (18) keine elektrische Spannung anliegt, sobald der Sensor (18) von dem zumindest einen Teilstrom des Luftstroms durchströmt wird.

9. Klebepistole nach Anspruch 8, **dadurch gekennzeichnet, dass** die Auswerteeinheit (19) eingerichtet ist, um unter Berücksichtigung einer Zeitspanne, in der am Sensor (18) keine elektrische Spannung anliegt, einen den Füllstand des Klebstofftanks (11) repräsentierenden Füllstandswert zu ermitteln.

10. Klebepistole nach einem der Ansprüche 7 bis 9, **dadurch gekennzeichnet, dass** der Sensor (18) ein mit einer Rückstellkraft, insbesondere einer Feder (21), beaufschlagtes Stellelement (20) hat, welches durch die Rückstellkraft in einer ersten Position gehalten wird.

11. Klebepistole nach Anspruch 10, **dadurch gekennzeichnet, dass** das Stellelement (20) ausgebildet ist, um wenigstens zeitweise zumindest von dem den Sensor (18) durchströmenden Teilstrom des Luftstroms mit einer der Rückstellkraft, insbesondere der Feder (21), entgegenwirkenden Kraft beaufschlagt zu werden und/oder in einer von der ersten Position verschiedenen zweiten Position gehalten zu werden.

12. Klebepistole nach einem der Ansprüche 7 bis 11, **dadurch gekennzeichnet, dass** wenigstens ein Heizelement (22) vorgesehen ist, das den im Klebstofftank (11) bevorrateten Klebstoff zumindest zeitweise während eines Klebebetriebs erwärmt.

13. Klebepistole nach einem der Ansprüche 7 bis 12, **dadurch gekennzeichnet, dass** wenigstens ein Temperatursensor (23) vorgesehen ist, der eine Temperatur im Inneren des Klebstofftanks (11) erfasst.

14. Klebepistole nach Anspruch 13, **dadurch gekennzeichnet, dass** die erfasste Temperatur an eine zentrale Steuereinheit (25) übertragbar ist, die in Abhängigkeit der erfassten Temperatur wenigstens zeitweise ein Steuersignal, durch welches eine Heizleistung des Heizelements (22) verändert wird, erzeugt.

15. Klebepistole nach einem der Ansprüche 7 bis 14, **dadurch gekennzeichnet, dass** der Klebstofftank (11) Aluminium aufweist.

## Claims

1. Measuring system for detecting the fill level of an adhesive tank (11) from which adhesive is discharged at least occasionally with the aid of a conveying medium, with a sensor (18) by means of which a measuring signal can be generated at least every so often as a function of a status value of the conveying medium, and with an evaluation unit (19), which is designed to receive the measurement signal and to determine a filling level of the adhesive tank (11) on the basis of the measurement signal, **characterised in that** the sensor (18) is designed, such that the conveying medium flows through it, and has an actuating element (20) which can be moved at least temporarily when there is a change in pressure acting on the actuating element (20).

2. Measuring system according to claim 1, **characterised in that** an output unit (14) is provided for outputting at least temporarily visually and/or acoustically perceptible information about the filling level of the adhesive tank (11), to which, based on the filling level determined by the evaluation unit (19), a generated information signal can be transmitted, which initiates the information output by the output unit (14).

3. Measuring system according to claim 2, **characterised in that** the output unit (14) has a display and/or at least one LED, in particular at least two LEDs, which are set up in such a way that information about the filling level of the adhesive in the adhesive tank (11) is output, **in that** a different number of LEDs and/or LEDs of different colours light up at least temporarily.

4. Measuring system according to one of the preceding claims, **characterised in that** the sensor (18) has an actuating element (20) through which a flow opening (28) of the sensor (18), is at least temporarily, at least partially closable, with an overflow opening (29) preferably being provided between the inlet (26) and the outlet (27), through which the pumped medium flows at times at least when the through-flow opening (28) is in the closed state.

5. Measuring system according to claim 4, **characterised in that** the actuating element (20) is acted upon by a restoring force, in particular from a spring (21), and/or is held in a first position, in particular one that reduces the cross section of the flow opening (28) of the sensor (18), wherein the actuating element (20) is preferably designed such that the pumped medium flowing through the sensor (18) is acted upon, at least temporarily, with a force counteracting the restoring force, in particular from the spring (21), and/or to be held in a second position that differs from the first position, in particular by the increasing cross section of the flow opening (28) of the sensor (18).

6. Measuring system according to one of the preceding claims, **characterised in that** the conveying medium is air.

7. Glue gun (10) for dispensing a liquid adhesive, with an adhesive tank (11), in which a liquid adhesive is stored at least temporarily, with a discharge nozzle (13) through which the liquid adhesive can be dispensed, and with a feed unit (15) which when an operating element (12) is actuated, liquid adhesive is conveyed from the adhesive tank (11) to the discharge nozzle (13), the feed unit (15) having at least one compressed air duct (17) which is at least temporarily connected to the adhesive tank (11) in such a fluid-communicating manner that liquid adhesive is conveyed to the discharge nozzle (13) due to an over-pressure or under-pressure, which is generated by an air stream flowing through the compressed air duct (17), **characterised in that** the compressed air duct (17) has a measuring system according to one of claims 1 to 6, with at least one sensor (18), by means of which a measurement signal is generated as a function of the air flow flowing through the compressed air duct (17) and can be generated and transmitted to an evaluation unit (19), which is designed to determine a fill level value representing the fill level of the adhesive tank (11) on the basis of the measurement signal and to transmit it to an output unit (14).

8. Glue gun according to claim 7, **characterised in that** the sensor (18) is designed such that at least a partial flow of the air flow flows through it at least temporarily when the operating element (12) is actuated, the sensor (18) preferably being connected in such a way in an electrical circuit such that no electrical voltage is applied to the sensor (18) as soon as the at least one partial flow of the air flow flows through the sensor (18)

9. Glue gun according to claim 8, **characterised in that** the evaluation unit (19) is set up to determine a fill level value representing the fill level of the adhesive tank (11), taking into account a period of time in which no electrical voltage is present at the sensor (18).

10. Glue gun according to one of claims 7 to 9, **characterised in that** the sensor (18) has an actuating element (20) which is acted upon by a restoring force, in particular from a spring (21), which is held in a first position by the restoring force.

11. Glue gun according to claim 10, **characterised in that** the actuating element (20) is designed such that the partial flow of the air flow flowing through the sensor (18) is applied at least temporarily with a force counteracting the restoring force, in particular from the spring (21), and/or is held in a second position different from the first position.

12. Glue gun according to one of claims 7 to 11, **characterised in that** at least one heating element (22) is provided which at least temporarily heats the adhesive stored in the adhesive tank (11) during a gluing operation.

13. Glue gun according to one of claims 7 to 12, **characterised in that** at least one temperature sensor (23) is provided, which detects the temperature inside the glue tank (11).

14. Glue gun according to claim 13, **characterised in that** the detected temperature can be transmitted to a central control unit (25) which, depending on the detected temperature, at least temporarily generates a control signal which changes the heat output of the heating element (22).

15. Glue gun according to one of claims 7 to 14, **characterised in that** the glue tank (11) possesses aluminium.

## Revendications

1. Système de mesure pour détecter le niveau de remplissage d'un réservoir de colle (11), à partir duquel de la colle est distribuée au moins temporairement à l'aide d'un milieu de transport, avec un capteur (18), au moyen duquel un signal de mesure peut être généré au moins temporairement en fonction d'une valeur d'état du milieu de transport, et avec une unité d'évaluation (19), laquelle est réalisée pour recevoir le signal de mesure et pour déterminer un niveau de remplissage du réservoir de colle (11) sur la base du signal de mesure, **caractérisé en ce que** le capteur (18) est réalisé pour être traversé par le milieu de transport de transport et possède un élément de réglage (20), lequel est mobile au moins temporairement lors d'une variation de pression agissant sur l'élément de réglage (20).

2. Système de mesure selon la revendication 1, **caractérisé en ce qu'**une unité de sortie (14) pour la sortie d'une information perceptible au moins temporairement de manière visuelle et/ou acoustique sur le niveau de remplissage du réservoir de colle (11), à laquelle peut être transmis un signal d'information généré par l'unité d'évaluation (19) en se basant sur le niveau de remplissage déterminé, lequel initie la sortie d'information par l'unité de sortie (14).

3. Système de mesure selon la revendication 2, **caractérisé en ce que** l'unité de sortie (14) a un écran et/ou au moins une DEL, en particulier au moins deux DEL, qui sont agencées de telle sorte qu'une information sur le niveau de la colle dans le réservoir de colle (11) est sortie du fait qu'un nombre différent de DEL et/ou de DEL de différentes couleurs s'allument au moins temporairement.

4. Système de mesure selon l'une quelconque des revendications précédentes, **caractérisé en ce que** le capteur (18) a un élément de réglage (20) par lequel une ouverture de passage (28) du capteur (18), disposée entre une entrée (26) et une sortie (27) pour le milieu de transport, peut être fermée au moins partiellement, au moins temporairement, dans lequel une ouverture de débordement (29), à travers laquelle le milieu de transport s'écoule temporairement au moins dans l'état fermé de l'ouverture de passage (28), est de préférence prévue entre l'entrée (26) et la sortie (27).

5. Système de mesure selon la revendication 4, **caractérisé en ce que** l'élément de réglage (20) est sollicité avec une force de rappel, en particulier un ressort (21), et/ou est maintenu dans une première position, réduisant en particulier la section transversale de l'ouverture de passage (28) du capteur (18), dans lequel l'élément de réglage (20) est de préférence réalisé pour être sollicité au moins temporairement au moins par le milieu de transport traversant le capteur (18) avec une force s'opposant à la force de rappel, en particulier du ressort (21), et/ou pour être maintenu dans une deuxième position différente de la première position, augmentant en particulier la section transversale de l'ouverture de passage (28) du capteur (18).

6. Système de mesure selon l'une quelconque des revendications précédentes, **caractérisé en ce que** le milieu de transport est l'air.

7. Pistolet à colle (10) pour l'émission d'une colle liquide avec un réservoir de colle (11), dans lequel une colle liquide est stockée au moins temporairement, avec une buse de distribution (13), à travers laquelle la colle liquide peut être distribuée, et avec une unité d'avance (15), qui, lors de l'actionnement d'un élément de commande (12), transporte de la colle liquide à partir du réservoir de colle (11) vers la buse de distribution (13), dans lequel l'unité d'avance (15) présente au moins un guidage d'air comprimé (17) qui est relié au réservoir de colle (11), au moins temporairement, en communication fluidique de telle sorte que la colle liquide est transportée vers la buse de distribution (13) en raison d'une surpression ou dépression, qui est générée par un flux d'air traversant le guidage d'air comprimé (17), **caractérisé en ce que** le guidage d'air comprimé (17) a un système de mesure selon l'une des revendications 1 à 6, avec au moins un capteur (18), au moyen duquel un signal de mesure peut être généré en fonction du flux d'air traversant le guide d'air comprimé (17) et peut être transmis à une unité d'évaluation (19), laquelle est réalisée pour déterminer, sur la base du signal de mesure, une valeur de niveau représentant le niveau de remplissage du réservoir de colle (11) et pour la transmettre à une unité de sortie (14).

8. Pistolet à colle selon la revendication 7, **caractérisé en ce que** le capteur (18) est réalisé pour être traversé au moins temporairement par au moins un courant partiel du flux d'air lors de l'actionnement de l'élément de commande (12), dans lequel e capteur (18) est de préférence branché dans un circuit électrique de telle sorte qu'aucune tension électrique n'est appliquée au capteur (18) dès que le capteur (18) est traversé par le au moins un courant partiel du flux d'air.

9. Pistolet à colle selon la revendication 8, **caractérisé en ce que** l'unité d'évaluation (19) est conçue pour déterminer une valeur de niveau représentant le niveau de remplissage du réservoir de colle (11) en tenant compte d'un intervalle de temps pendant lequel aucune tension électrique n'est appliquée au capteur (18).

10. Pistolet à colle selon l'une quelconque des revendications 7 à 9, **caractérisé en ce que** le capteur (18) a un élément de réglage (20) sollicité avec une force de rappel, en particulier d'un ressort (21), lequel est maintenu dans une première position par la force de rappel.

11. Pistolet à colle selon la revendication 10, **caractérisé en ce que** l'élément de réglage (20) est réalisé pour être sollicité au moins temporairement, au moins par le courant partiel du flux d'air traversant le capteur (18), avec une force s'opposant à la force de rappel, en particulier du ressort (21), et/ou pour être maintenu dans une deuxième position différente de la première position.

12. Pistolet à colle selon l'une quelconque des revendications 7 à 11, **caractérisé en ce qu'**il est prévu au moins un élément chauffant (22) qui chauffe au moins temporairement la colle stockée dans le réservoir de colle (11) pendant une opération de collage.

13. Pistolet à colle selon l'une quelconque des revendications 7 à 12, **caractérisé en ce qu'**il est prévu au moins un capteur de température (23), qui détecte une température à l'intérieur du réservoir de colle (11).

14. Pistolet à colle selon la revendication 13, **caractérisé en ce que** la température détectée peut être transmise à une unité de commande centrale (25) qui, en fonction de la température détectée, génère au moins temporairement un signal de commande par lequel une puissance de chauffage de l'élément chauffant (22) est modifiée.

15. Pistolet à colle selon l'une quelconque des revendications 7 à 14, **caractérisé en ce que** le réservoir de colle (11) présente de l'aluminium.
